# DEMANDE DE BREVET EUROPEEN

(11) **EP 0 527 716 A1**
(43) Date de publication de la demande: **17.02.1993**
(21) Numéro de dépôt: 92870072.3
(22) Date de dépôt: 14.05.1992
(51) Int. Cl.: G01F 1/06, G01F 1/10

(54) **Compteur de débit pour liquides**

(30) Priorité: 15.05.1991 BE 9100449
(71) Demandeur: I.S. INDUSTRIAL SUPPLY B.V., NL-4261 TV Wijk en Aalburg (NL)
(72) Inventeur: Peters, Paulus Jakobus, Balgoy (NL)
(74) Mandataire: Pieraerts, Jacques

(57) **Abrégé**

L'invention concerne un compteur de débit pour liquides comportant une chambre dans laquelle un rotor équipé de plusieurs ailettes appartenant à un axe central est mis en mouvement sous l'influence du flux de liquide s'écoulant à travers la chambre et chaque passage d'une ailette devant un point de la chambre est détecté par des moyens électriques ou électroniques de façon qu'une mesure de la quantité du liquide s'écoulant puisse être effectuée, ce compteur étant caractérisé en ce que l'extrémité de chaque ailette (3) présente une partie élargie.

## Description

L'invention se rapport à un compteur de débit pour liquides comportant une chambre dans laquelle un rotor équipé de plusieurs ailettes peut être mis en mouvement sous l'influence du flux de liquide s'écoulant au travers de la chambre et chaque passage d'une ailette devant un point de la chambre est détecté par des moyens électriques ou électroniques, de telle sorte que, par unité de temps, une mesure de la quantité de liquide s'écoulant au travers de la chambre peut être effectuée.

Des compteurs de débit de liquides du type considéré sont décrits notamment dans la demande néerlandaise 80 03 374 et le brevet européen 0 228 577. De plus, la demande européenne 90870214 décrit une version améliorée d'un compteur de débit pour liquides dans lequel un rotor est mis en mouvement par le fluide qui s'écoule au travers du compteur et les passages des ailettes du rotor, détectés par des moyens électroniques connus, indiquent le volume de liquide traversant le compteur.

L'invention a pour but, d'une part, de prescrire un compteur de débit qui est équipé d'un rotor dont la structure assure une fiabilité sensiblement plus élevée, ce qui permet d'effectuer des mesures d'un type entièrement nouveau, et, d'autre part, faire usage à cet effet d'une chambre dont la structure est simplifiée à ce point qu'il devient possible d'y incorporer un filtre à grande capacité de filtrage faisant également fonction de plaque d'arrêt pour la chambre dans laquelle est monté le rotor.

Pour réaliser cet objectif conformément à l'invention, chaque extrémité de chaque ailette présente, selon une coupe menée orthogonalement par rapport à l'axe du rotor, une partie élargie qui permet d'effectuer la mesure précitée dans de meilleures conditions et d'augmenter le rendement hydrodynamique du rotor.

Selon une forme d'exécution possible, la partie élargie précitée de l'extrémité de l'ailette du rotor se situe d'un côté du plan de l'ailette tandis que, selon une autre forme d'exécution possible, cette partie élargie de l'extrémité de l'ailette du rotor se situe des deux côtés du plan de l'ailette.

Toujours selon l'invention, la partie élargie précitée qui est en contact avec la chambre précitée s'étend en arc de cercle et présente un rayon qui correspond à celui de ladite chambre.

Selon une autre forme d'exécution possible de l'invention, la partie de l'ailette du rotor qui est dirigée vers la chambre précitée est pourvue d'une matière réfléchissant la lumière.

D'autres détails et avantages de l'invention ressortiront de la description qui sera donnée ci-après d'un compteur de débit pour liquides, selon l'invention. Cette description n'est donnée qu'à titre d'exemple et ne limite pas l'invention. Les notations de référence se rapportent aux figures ci-jointes.

La figure 1 est une représentation schématique d'un rotor selon une première forme d'exécution.

La figure 2 est une représentation également schématique du rotor selon une variante de l'invention.

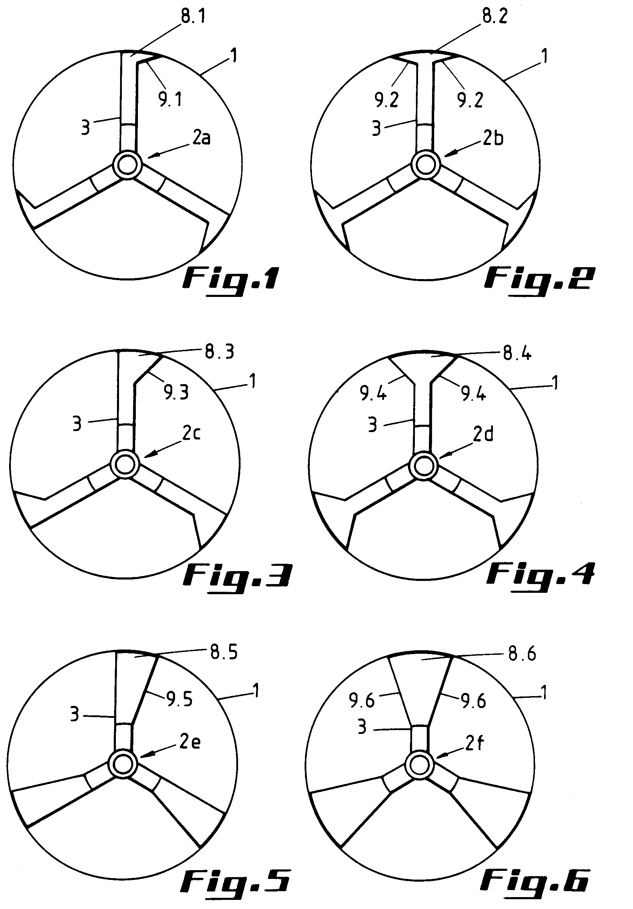

La figure 1 est une vue d'une seconde forme d'exécution du rotor selon l'invention.

La figure 4 est une vue d'une variante d'une deuxième forme d'exécution du rotor selon l'invention.

La figure 5 est une vue du rotor selon une troisième forme d'exécution.

La figure 6 est une vue du rotor selon une variante de la troisième forme d'exécution.

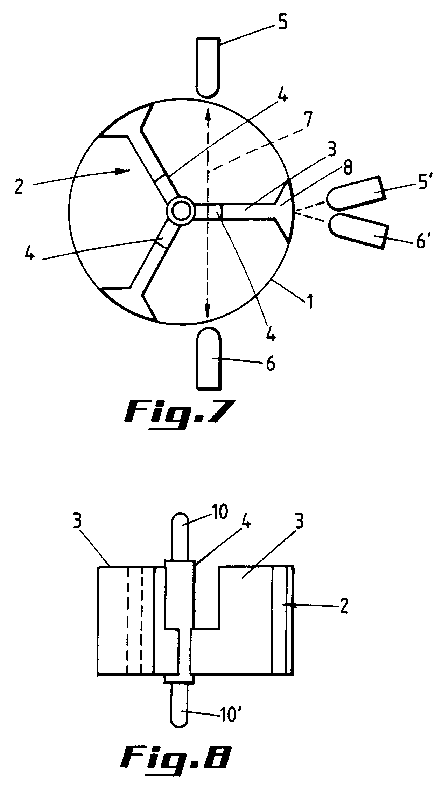

La figure 7 illustre les possibilités de mesure à l'aide d'un rotor conforme à l'invention en comparaison avec des procédés de mesure considérés comme classique.

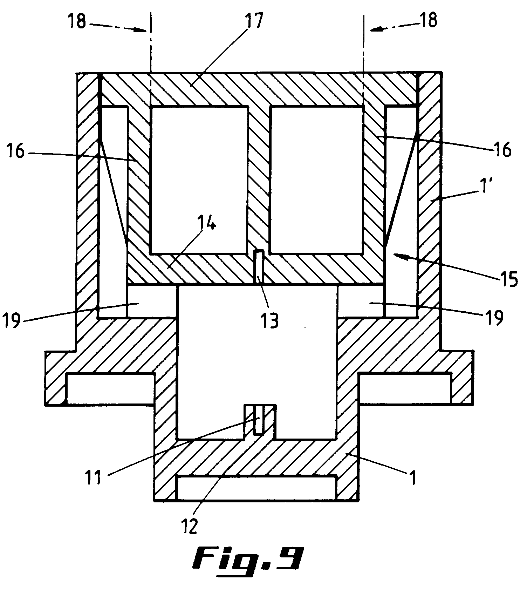

La figure 8 est une vue latérale du rotor selon la figure 7.

La figure 9 est, à une échelle réduite, une coupe menée au travers d'un compteur de débit pour liquides selon l'invention après enlèvement du rotor selon l'invention.

Le compteur de débit selon les figures consiste, entre autres, en une chambre cylindrique, suggérée schématiquement par le cercle 1 (figures 1 à 7).

En réalité, la chambre cylindrique 1 dans laquelle est monté le rotor 2, d'un type qui sera décrit ci-après, se raccorde à une chambre cylindrique plus large 1′ dans laquelle figurent des éléments dont certains appartiennent également à l'invention.

Le liquide pénétrant dans la chambre 1 et dont le débit doit être mesuré, pénètre dans cette chambre en tourbillonnant et autant que possible d'une manière dirigée perpendiculairement par rapport aux ailettes du rotor 2 dont les diverses variantes ont été représentées par les références 2a à 2f.

Jusqu'à ce jour, un seul type de mesure électrique ou électronique semble possible, c'est-à-dire celle dans laquelle les ailettes 3 du rotor (figures 7 et 8) présentent un orifice (4) au travers duquel des signaux électriques ou électroniques peuvent être émis ou reçus.

Un procédé de mesure de l'espèce est clairement illustré par les figures 7 et 8, où un émetteur 5 émet un signal électrique, signal qui est reçu par le capteur 6. La droite selon laquelle le signal se déplace entre l'émetteur 5 et le capteur 6 est représentée par la ligne en traits interrompus 7. On remarque aisément que le signal traverse l'orifice 4 et est interrompu par l'ailette du rotor 2 au cours de la rotation de cet élément. Quoique le rotor 2 selon ces figures soit du type qui appartient à l'invention, des mesures selon le procédé décrit sont toujours possibles. Une mesure sensiblement améliorée peut être obtenue grâce à la présence sur l'extrémité de l'ailette 3 d'une partie élargie 8 dont la partie dirigée vers la chambre 1 est convexe et présente un rayon de courbure qui correspond à celui de la chambre elle-même.

Grâce à cette forme remarquable de l'extrémité de l'ailette 3, dont la conception est directement dirigée de l'idée inventive, plusieurs types de mesure peuvent être exécutés.

A la figure 7 on remarque la disposition combinée de l'émetteur 5′ et du récepteur 6′. On remarquera que la partie convexe de la partie élargie 8 peut être pourvue d'une matière réfléchissant la lumière.

Avant de souligner les divers avantages du compteur de débit équipé d'un rotor selon l'une des formes d'exécution représentées aux figures, les diverses variantes de cet élément important seront décrites ci-après.

La figure 1 représente un rotor 2a dont l'extrémité de l'ailette 3 n'est pourvue que d'un côté d'une partie élargie 8′.

Par opposition avec cette forme d'exécution, la figure 1 représente une forme d'exécution plus symétrique de la partie élargie 8 d'un rotor 2b.

Dans les deux cas, les parties élargies 8 et 8.1 présentent un profil convexe présentant un rayon de courbure qui correspond à celui de la chambre 1. Ceci est également le cas pour toutes les autres variantes de rotor selon les figures 3 à 6.

Les parties élargies 8 et 8.1 prennent donc naissance grâce à la combinaison de la partie convexe dont la courbure est adaptée à celle de la chambre 1 et un côté, respectivement deux côtés 9 et 9' qui déterminent, avec l'ailette 3, un angle d'environ 70°.

Les formes d'exécution selon les figures 3 et 4 diffèrent uniquement des formes d'exécution déjà décrites dans le cadre des figures 1 et 2 du fait que les parties élargies 8.3 et 8.4 des rotors 2c, respectivement 2d, prennent naissance par la combinaison du même arrondi, adaptée à celui de la chambre 1 et de plans 9.3 et 9.4 qui coupent le plan de l'ailette 3 sous un angle de plus ou moins 45°.

Enfin, les formes d'exécution selon les figures 5 et 6 diffèrent uniquement par l'angle selon lequel les plans 9.5 et 9.6 dans les parties élargies 8.5 et 8.6 des rotors 2e coupent le plan de l'ailette du rotor.

Des rotors présentant une structure conforme à l'une des figures 2 à 7 assurent, dans une mesure considérable, une précision améliorée du mouvement de rotation. De même, la balance de ces rotors est extrêmement précise, ce qui entraîne une diminution de la pression sur les petits axes des rotors de ce type. Les petits axes du rotor 2 sont figurés à la figure 8 par les références 10 et 10'.

Un autre avantage fort remarquable des rotors selon l'invention concerne des mesures qui ont démontré que l'effet appelé "effet de retard" est à ce point minime qu'il ne peut plus être mesuré. La raison doit être trouvée dans le profil des ailettes du rotor. Grâce à la présence des parties élargies de chaque ailette du rotor, telles qu'elles viennent d'être décrites en détail, il a pu être constaté que l'impulsion lumineuse est maîtrisée pratiquement comme suit: 0%-100%-0%. Lorsqu'il est fait usage d'une ailette de rotor droite ou sensiblement droite, l'impulsion lumineuse n'évolue par rigidement selon le concept allumé/éteint mais selon un effet d'abaissement progressif qui pourrait être défini de la manière suivante: 0%-30%-60%-100%-60%-30%-0%.

Ainsi qu'il a déjà été démontré antérieurement, le rotor présente, dans ses diverses variantes selon l'invention, l'avantage remarquable qu'à l'aide d'un rotor il peut être mesuré selon deux principes totalement différents et cela séparément ou simultanément.

Ces deux procédés de mesure seront encore décrits ci-après:
a) une mesure électrique et/ou électronique traditionnelle d'un nombre de rotations est obtenue grâce à l'orifice 4 dans les ailettes 3 (figures 7 et 8). Pour obtenir une mesure dans ces circonstances, le signal d'impulsion doit parcourir une certaine distance depuis l'émetteur 5 jusqu'au récepteur 6.

Dans les procédés de mesure traditionnels connus à ce jour, la distance est au moins égale à une coupe de la chambre du rotor, schématiquement désignée par la référence 1, ce qui entraîne l'effet défavorable que l'impulsion se trouve également influencée par le liquide que doit traverser l'impulsion. Cette sorte de mesure ne peut donc raisonnablement être effectuée que pour des liquides relativement clairs.
b) Un procédé de mesure totalement nouveau peut également avoir lieu par réflection directe souvent dénommée "Direct Reflex Measuring".

Sur l'arrondi des parties convexes des ailettes du rotor peut, comme il a déjà été dit plus haut, être disposée une matière réfléchissant la lumière qui permet de mesurer les rotations sans que le signal électrique ou électronique doive traverser le liquide présent dans la chambre 1. De plus, l'émetteur et le capteur se trouvent du même côté de la chambre 1. La distance que doit parcourir le signal électrique ou électronique est extrêmement faible de telle sorte que des mesures peuvent maintenant être effectuées au travers de liquides troubles y compris des huiles noires.
c) Il y a enfin lieu de signaler le très grand avantage que présente la possibilité d'appliquer séparément ou simultanément les deux procédés de mesure.

Il en résulte trois procédés de mesure qui peuvent être exécutés à l'aide du même rotor, c'est-à-dire:
- le système traditionnel mesurant les passages des impulsions au travers des orifices 4 ménagés dans les ailettes du rotor;
- le nouveau principe qui mesure les passages d'une ailette de rotor;
- le procédé de mesure traditionnel ne permet que la mesure de liquides, tandis que le nouveau système, tel qu'il a déjà été dit précédemment, permet d'exécuter des mesures au travers de liquides troubles et hautement non translucides;
- une combinaison de mesures traditionnelles et "DMF n'est pas seulement plus précise mais également plus fiable.

d) Un dernier avantage du rotor selon l'invention peut être vu dans le fait que tous les éléments existant du compteur de débit pour liquides demeurent les mêmes. Ce qui différencie entre eux les divers compteurs de débit fonctionnant selon l'un ou l'autre des procédés décrits ci-dessus sont les composantes électroniques.

Le compteur de débit pour liquides selon l'invention offre, de plus, l'avantage que dans la chambre cylindrique 1′, de diamètre plus large, appartenant à la chambre 1 (figure 9) un filtre à très haute capacité de filtrage peut être monté.

Grâce à la conception du rotor celui-ci peut être monté par ses petits axes 10 et 10' dans la chambre 1. L'axe inférieur 10′ s'adapte dans un orifice 11, dans la partie inférieure de la chambre 1. L'orifice 11 forme un logement pour l'axe 10' et fait partie d'un pont, de préférence un pont 12 en forme de croix ou d'étoile appartenant à la chambre de rotor 1. A la partie supérieure, l'axe 10 est logé dans un orifice 13 dans la plaque d'arrêt 14 qui obture la chambre du rotor à sa partie supérieure. La plaque d'arrêt 14 fait partie d'un complexe filtrant 15 présentant une paroi filtrante 16 et un disque de centrage filtrant 17 dont la partie centrale (entre les lignes en points-tirets 18) fait également office de filtre pour le fluide entrant.

La plaque de centrage 17 s'adapte de manière étanche à la manière d'un couvercle filtrant dans la partie supérieure de la chambre élargie cylindrique 1′ de la chambre de rotor 1.

Les deux composantes (la chambre cylindrique 1′ et la chambre de rotor 1) peuvent être produites en une seule opération d'injection. Le complexe filtrant 15 et le disque filtrant de centrage 17 ainsi que la plaque d'arrêt 14 sont également obtenus en une opération d'injection en même temps que la paroi du filtre 16 située entre ces éléments.

Il est à remarquer que le complexe filtrant 15 repose, à la partie inférieure, sur les éléments 19 destinés à activer les flux de liquide. Le profil de ces éléments importants a été décrit en détail dans la demande européenne 90870214.5.

De la description qui vient d'être donnée d'un complexe filtrant selon la demande résulte clairement que grâce à sa fonction en tant qu'élément de centrage et de logement du rotor 2, la capacité de filtrage est optimalisée au maximum ce qui est un but de l'invention.

L'invention n'est pas limitée à la forme d'exécution décrite ci-dessus et bien des modifications pourraient y être apportées sans sortir du cadre de la présente demande de brevet.

## Revendications

1. Compteur de débit pour liquides comportant une chambre dans laquelle un rotor équipé de plusieurs ailettes peut être mis en mouvement sous l'influence du flux de liquide s'écoulant au travers de la chambre et chaque passage d'une ailette devant un point de la chambre est détecté par des moyens électriques ou électroniques, de telle sorte que, par unité de temps, une mesure de la quantité de liquide s'écoulant au travers de la chambre peut être effectuée, caractérisée en ce que chaque extrémité de chaque ailette (3) présente, selon une coupe menée orthogonalement par rapport à l'axe du rotor (2), une partie élargie qui permet d'effectuer la mesure précitée dans de meilleures conditions et d'augmenter le rendement hydrodynamique du rotor.

2. Compteur selon la revendication 1, caractérisé en ce que la partie élargie précitée (8.1, 8.3, 8.5) de l'extrémité de l'ailette (3) du rotor (2) se situe d'un côté du plan de l'ailette (3).

3. Compteur selon la revendication 1, caractérisé en ce que la partie élargie précitée (8.2, 8.4, 8.6) se situe des deux côtés du plan de l'ailette (3).

4. Compteur selon l'une quelconque des revendications 1 - 3, caractérisé en ce que la partie élargie précitée qui est en contact avec la chambre précitée (1) s'étend en arc de cercle et présente un rayon qui correspond à celui de ladite chambre.

5. Compteur selon la revendication 4, caractérisé en ce que la partie élargie précitée est constituée par la partie précitée qui s'étend en arc de cercle et au moins un plan coupant l'ailette du rotor sous un angle d'environ 70°.

6. Compteur selon la revendication 4, caractérisé en ce que la partie élargie précitée est constituée par la partie précitée qui s'étend en arc de cercle et au moins un plan coupant l'ailette du rotor sous un angle d'environ 45°.

7. Compteur selon la revendication 4, caractérisé en ce que la partie élargie précitée est constituée par la partie qui s'étend en arc de cercle et au moins un plan coupant l'ailette du rotor sous un angle d'environ 170°.

8. Compteur selon l'une des revendications 1 - 7, caractérisé en ce que la partie de l'ailette (3) du rotor (2) qui est dirigé vers la chambre précitée (1) est pourvue d'une matière réfléchissant la lumière.

9. Compteur selon l'une des revendications 1 - 8, caractérisé en ce qu'en aval de la chambre précitée (1) dans laquelle est logé ledit rotor (2) une chambre (1′) se raccorde à la chambre citée en premier lieu (1) dans quelle chambre (1′) est monté un complexe filtrant (15) qui comporte à une extrémité une plaque d'arrêt (14) dans laquelle est logée une extrémité de l'axe du rotor (2) et, à l'autre extrémité, un disque de centrage (17) dont la partie centrale fait office de filtre et en ce qu'une paroi de filtre (16) s'étend entre la plaque d'arrêt (14) et le disque de centrage (17).
